# EUROPÄISCHE PATENTANMELDUNG

(11) **EP 4 708 768 A1**
(43) Veröffentlichungstag der Anmeldung: **11.03.2026**
(21) Anmeldenummer: 24199250.2
(22) Anmeldetag: 09.09.2024
(51) Int. Cl.: H04L 9/40, G06F 21/62

(54) **VERFAHREN UND ANORDNUNG ZUR ANPASSUNG VON ZUGRIFFSRECHTEN INDUSTRIELLER ANWENDUNGEN**

(71) Anmelder: Siemens Aktiengesellschaft, 80333 München (DE)
(72) Erfinder: Höfele, Markus, 68259 Mannheim (DE); Schrey, Rolf, 41189 Mönchengladbach (DE)
(74) Vertreter: Siemens Patent Attorneys

(57) **Zusammenfassung**

Die Erfindung betrifft ein Verfahren und eine Anordnung zur Anpassung von Zugriffsrechten (ZR) einer industriellen Anwendung (AW) oder eines industriellen Gerätes (G) einer industriellen Automatisierungsanordnung, wobei der Anwendung (AW) oder dem Gerät (G) im Zuge der Installation oder Inbetriebnahme ein Satz Zugriffsrechte (ZR) zum Zugriff auf Ressourcen (R) der Automatisierungsanordnung, insbesondere auf Daten, Netzwerkverbindungen und Automatisierungskomponenten, zugeordnet wird, und wobei während eines Betriebs der Anwendung (AW) oder des Gerätes (G) Zugriffe und / oder Zugriffsversuche auf die Ressourcen (R) hinsichtlich ihrer Zulässigkeit in Bezug auf die Zugriffsrechte (ZR) geprüft und Zugriffe entsprechend erlaubt oder gesperrt werden. Dabei werden während des Betriebs der Anwendung (AW) oder des Gerätes (G) die tatsächlich für die Zugriffe genutzten der Zugriffsrechte (ZR) protokolliert, wobei die protokollierten Zugriffsrechte (ZR) mit dem ursprünglichen Satz Zugriffsrechte (ZR) verglichen werden, wobei unter Wegfall zumindest eines Teils der nicht genutzten Zugriffsrechte (ZR) aus dem ursprünglichen Satz Zugriffsrechte (ZR) ein neuer Satz Zugriffsrechte (NZR) erstellt wird, und wobei im Zuge einer Neuinstallation der Anwendung (AW) oder einer ähnlichen Anwendung (AW) oder im Zuge einer erneuten Inbetriebnahme des Gerätes (G) oder der Inbetriebnahme eines ähnlichen Gerätes (G) der neue Satz Zugriffsrechte (NZR) dieser Anwendung (AW) oder diesem Gerät (G) zugeordnet wird. Somit können Zugriffsrechte automatisch verwaltet werden und ohne Beeinträchtigung eines laufenden Betriebs können die Zugriffsrechte bei nachfolgenden Installationen bzw. Inbetriebnahmen auf das tatsächlich im vorherigen Betrieb genutzte Maß eingeschränkt werden.

## Beschreibung

Die Erfindung betrifft ein Verfahren zur Anpassung von Zugriffsrechten einer industriellen Anwendung oder eines industriellen Gerätes einer industriellen Automatisierungsanordnung gemäß dem Oberbegriff des Patentanspruchs 1, und eine Anordnung zur Anpassung von Zugriffsrechten einer industriellen Anwendung oder eines industriellen Gerätes einer industriellen Automatisierungsanordnung gemäß dem Oberbegriff des Patentanspruchs 9.

Computerprogramme, Applikationen oder ganze Geräte werden regelmäßig mit Zugriffsrechten ausgestattet, die definieren, welche Berechtigungen sie für Zugriffe auf Ressourcen haben. Beispielsweise kann eine Applikation die Berechtigung haben, auf bestimmte Bereiche eines Dateisystems zuzugreifen, in gewissem Umfang Netzwerkverbindungen zu nutzen, auf das Internet zuzugreifen, Datenströme zu versenden und dergleichen.

Solche Berechtigungen werden regelmäßig im industriellen Umfeld mit der Projektierung festgelegt. Beispielsweise können auch einer Anwendung, einem Docker-Container oder einem Betriebssystem Zertifikate zugeordnet werden, die bestimmte Berechtigungen definieren.

Die Definition von Berechtigungen ist an sich ein oft manuell betriebener, aufwendiger Prozess. Nach dem Prinzip der geringsten Rechte (Least Privilege Principle, PoLP) ist vorgesehen, dass nur das Minimum an Privilegien oder Zugriffsrechten gewährt werden sollte, das für die Ausführung einer Aufgabe erforderlich ist.

Wird eine Anwendung aktualisiert oder verändert, muss dieser Schritt erneut durchgeführt werden. Hierbei wird jedoch nicht hinterfragt, ob die konfigurierten Rechte zu umfangreich sind.

In der Praxis werden Anwendungen, Betriebssysteme, Geräte oder dergleichen in verschiedene Klassen eingeteilt, wobei jeder Klasse ein bestimmtes Setup von Berechtigungen zugeordnet ist. Dann wird durch Einordnung der Anwendung in eine solche Klasse der Berechtigungsumfang festgelegt.

Wird eine neue Version einer Anwendung oder dergleichen erstellt, ist es dazu geübte Praxis, die Berechtigungen von der Vorgängerversion zu übernehmen.

Stellt sich im laufenden Betrieb heraus, dass eine Anwendung zu wenige Rechte hat, also mit dem zugeordneten Setup nicht funktioniert, werden manuell entsprechende Erweiterungen vorgenommen, beispielsweise Ports in Firewalls freigeschaltet, Dateizugriffe erlaubt, Kommunikation mit weiteren Netzwerkpartnern ermöglicht oder dergleichen.

Solange kein Fehler auftritt, werden einmal eingeräumte Rechte regelmäßig nicht hinterfragt und wieder eingeschränkt oder die Berechtigungen werden nach einer vorgegebenen Zeit zurückgenommen (z.B. Ad-Hoc Admin).

Die Druckschrift US 2022/0271938 A1 - Ip et al. "METHODS AND APPARATUS TO MANAGE APPLICATION ACCESS IN NETWORKED ENVIRONMENTS" schlägt vor, anhand von ungenutzten Zugriffsberechtigungen den Zugriff auf APIs einer Anwendung zu beschränken, indem nutzerbezogene Credentials, also Zertifikate, eingeschränkt werden, wobei die APIs dem Zugriff auf sensible Daten bzw. Datenverbindungen dienen.

Im industriellen Kontext sind einschränkende Administrationszugriffe in laufenden Systemen oft ungewünscht, da sie immer mit dem Risiko einer Funktionsstörung einhergehen. Zudem sind bestehende industrielle Anwendungen oft nicht für eine dynamische Verwaltung und Kontrolle von feingranular definierten Zugriffsberechtigungen eingerichtet. Dies gilt insbesondere für sog. 3rd-Party-Anwendungen, deren interne Funktionalität nicht angepasst werden kann. Die aus dem Stand der Technik bekannten Verfahren haben also den Nachteil, dass die Anwendungen selbst die genutzten und damit auch die nicht aktiv genutzten Berechtigungen, die im Folgenden auch Zugriffsrechte genannt werden, protokollieren. Damit müssen die Anwendungen darauf eingerichtet werden, was bei Anwendungen, Geräten oder Software von Drittanbietern oft nicht möglich ist. Zudem ist es im Stand der Technik nachteilig, dass Zugriffsrechte nur blockweise wegen einer Rollen-, Zertifikate- oder Nutzerbezogenen Verwaltung zugeordnet oder zurückgezogen werden können.

Es ist also eine Aufgabe der vorliegenden Erfindung, die Verwaltung von Zugriffsrechten auf Ressourcen insbesondere für bestehende industrielle Anwendungen und Geräte zu verbessern, wobei die geschilderten Beeinträchtigungen und Risiken minimiert werden und eine feingranulare Zuordnung von Zugriffsrechten gemäß den tatsächlichen Anforderungen weitgehend automatisch erfolgt.

Die Kernidee der erfindungsgemäßen Lösung dieses Problems beruht auf der bekannten Vorgehensweise, dass Berechtigungen von einer Vorgängerversion übernommen werden oder aus einer zugeordneten Geräteklasse oder Anwendungsklasse pauschal übernommen werden. Dazu ist erfindungsgemäß jedoch vorgesehen, dass im laufenden Betrieb einer Vorgängerversion oder einer artverwandten Anwendung oder eines gleichen oder artverwandten Gerätes protokolliert wird, welche Berechtigungen tatsächlich in Anspruch genommen werden. Beispielsweise kann protokolliert werden, auf welche externen Netzwerkadressen regelmäßig zugegriffen wird, welche Speicherbereiche im Arbeitsspeicher oder in einem Dateisystem tatsächlich adressiert werden und dergleichen.

Ein solches Monitoring wird im Stand der Technik durchgeführt, um Auffälligkeiten zu protokollieren, beispielsweise um festzustellen, ob eine Anwendung korrumpiert ist oder ein Gerät mit einem Virus oder einer Malware infiziert ist oder ein Hackerangriff durchgeführt wird oder durchgeführt wurde.

Erfindungsgemäß werden die Protokolle jedoch dazu verwendet, um bei nachfolgenden Versionen des Gerätes oder der Anwendung die Rechte maßgeschneidert auf das Maß einzuschränken, welches vorher tatsächlich genutzt wurde.

Die Aufgabe wird insbesondere durch das Verfahren gemäß Patentanspruch 1 und durch die Anordnung gemäß Patentanspruch 9 gelöst.

Dabei wird ein Verfahren zur Anpassung von Zugriffsrechten einer industriellen Anwendung oder eines industriellen Gerätes einer industriellen Automatisierungsanordnung vorgeschlagen, wobei der Anwendung oder dem Gerät im Zuge der Installation oder Inbetriebnahme ein Satz Zugriffsrechte zum Zugriff auf Ressourcen der Automatisierungsanordnung, insbesondere auf Daten, Netzwerkverbindungen und Automatisierungskomponenten, zugeordnet wird, und wobei während eines Betriebs der Anwendung oder des Gerätes Zugriffe und / oder Zugriffsversuche auf die Ressourcen hinsichtlich ihrer Zulässigkeit in Bezug auf die Zugriffsrechte geprüft und Zugriffe entsprechend erlaubt oder gesperrt werden. Dabei werden während des Betriebs der Anwendung oder des Gerätes die tatsächlich für die Zugriffe genutzten der Zugriffsrechte protokolliert, wobei die protokollierten Zugriffsrechte mit dem ursprünglichen Satz Zugriffsrechte verglichen werden, wobei unter Wegfall zumindest eines Teils der nicht genutzten Zugriffsrechte aus dem ursprünglichen Satz Zugriffsrechte ein neuer Satz Zugriffsrechte erstellt wird, und wobei im Zuge einer Neuinstallation der Anwendung oder einer ähnlichen Anwendung oder im Zuge einer erneuten Inbetriebnahme des Gerätes oder der Inbetriebnahme eines ähnlichen Gerätes der neue Satz Zugriffsrechte dieser Anwendung oder diesem Gerät zugeordnet wird. Mit diesem Verfahren können ohne Beeinträchtigung eines laufenden Betriebs bei nachfolgenden Installationen bzw. Inbetriebnahmen die Zugriffsrechte auf das tatsächlich im vorherigen Betrieb genutzte Maß eingeschränkt werden.

Die Aufgabe wird außerdem durch eine Anordnung zur Anpassung von Zugriffsrechten einer industriellen Anwendung oder eines industriellen Gerätes einer industriellen Automatisierungsanordnung gelöst, wobei der Anwendung oder dem Gerät ein Satz Zugriffsrechte zum Zugriff auf Ressourcen der Automatisierungsanordnung, insbesondere auf Daten, Netzwerkverbindungen und Automatisierungskomponenten, zugeordnet ist, und wobei eine Kontrollfunktion zur Prüfung von Zugriffen und / oder Zugriffsversuchen der Anwendung oder des Gerätes auf die Ressourcen hinsichtlich ihrer Zulässigkeit in Bezug auf die Zugriffsrechte während eines Betriebs und zur entsprechenden Erlaubnis oder Sperre der Zugriffe vorgesehen ist. Dabei ist eine Protokollierungseinrichtung vorgesehen, die dazu eingerichtet ist, während des Betriebs der Anwendung oder des Gerätes die tatsächlich für die Zugriffe genutzten der Zugriffsrechte zu protokollieren, wobei weiter vorgesehen ist, die protokollierten Zugriffsrechte mit dem ursprünglichen Satz Zugriffsrechte zu vergleichen, wobei ferner vorgesehen ist, unter Wegfall zumindest eines Teils der nicht genutzten Zugriffsrechte aus dem ursprünglichen Satz Zugriffsrechte einen neuen Satz Zugriffsrechte zu erstellen, und wobei vorgesehen ist, im Zuge einer Neuinstallation der Anwendung oder einer ähnlichen Anwendung oder im Zuge einer erneuten Inbetriebnahme des Gerätes oder der Inbetriebnahme eines ähnlichen Gerätes den neuen Satz Zugriffsrechte dieser Anwendung oder diesem Gerät zuzuordnen. Mit dieser Anordnung lassen sich die bereits anhand des Verfahrens erläuterten Vorteile erzielen.

Vorteilhafte Ausgestaltungen sind in den abhängigen Patentansprüchen angegeben, wobei die vorteilhaften Varianten des Verfahrens sinngemäß auch für die erfindungsgemäße Anordnung gelten, und umgekehrt. Die vorteilhaften Ausgestaltungen können sowohl einzeln, als auch in sinnfälliger Kombination miteinander realisiert werden.

Vorteilhaft wird der Anwendung oder dem Gerät im Zuge der Installation oder Inbetriebnahme der ursprüngliche Satz Zugriffsrechte anhand einer Anwendungsklasse der Anwendung oder anhand einer Geräteklasse des Gerätes aus einer Bibliothek ausgelesen und der Anwendung oder dem Gerät zugeordnet, so dass bei Anwendung des Verfahrens auf Standardparameter für die Zugriffsrechte aufgesetzt werden und auf eine manuelle Parametrierung der Zugriffsrechte weitgehend verzichtet werden kann.

Vorteilhaft weist der der Anwendung oder dem Gerät im Zuge der Installation oder Inbetriebnahme zugeordnete ursprüngliche Satz Zugriffsrechte auf einen Benutzer oder auf eine Rolle eines Benutzers oder einer Benutzergruppe bezogene Zugriffsrechte oder Einschränkungen auf oder wird mit solchen während des Betriebs erweitert, wobei diese auf den Benutzer oder die Benutzergruppe bezogenen Zugriffsrechte oder Einschränkungen in den neuen Satz Zugriffsrechte übernommen werden. Damit können Sätze von Zugriffsrechten, die allein auf eine Anwendung oder ein Gerät bezogen sind, um Benutzer- oder rollenbezogene Einschränkungen bzw. Freigaben erweitert werden. Dabei werden vorteilhaft die auf den Benutzer oder die Benutzergruppe bezogenen Zugriffsrechte nur in dem Maße übernommen, in dem diese während des Betriebs der Anwendung oder des Gerätes tatsächlich genutzt wurden.

In einer vorteilhaften Ausgestaltung werden die zugeordneten Zugriffsrechte durch eine Laufzeitumgebung, in der die Anwendung abläuft oder die auf dem Gerät installiert ist, insbesondere durch ein Betriebssystem, durch eine Firmware oder durch einen Hypervisor, zur Bewertung und Kontrolle der Zugriffe der Anwendung oder des Gerätes auf die Ressourcen verwendet. Damit ist die gesamte Außenkommunikation der Laufzeitumgebung geschützt. Vorteilhaft erfolgt die Protokollierung durch eine Funktion oder eine Erweiterung der Laufzeitumgebung, so dass mehrere Anwendungen derselben Laufzeitumgebung gleichermaßen kontrolliert werden können. In einer vorteilhaften Variante wird durch die Laufzeitumgebung eine externe Kontrollfunktion, insbesondere eine Firewall, gemäß der Zugriffsrechte konfiguriert, so dass jeweils eine lokale Umgebung eines kontrollierten Gerätes bzw. einer kontrollierten Anwendung lokal konfigurierbar ist und keine zentrale Verwaltung Kenntnis der lokalen Sicherheitsarchitektur haben muss.

Alternativ erfolgt die Anwendung der Zugriffsrechte und die Protokollierung der Nutzung der Zugriffsrechte extern zu dem Gerät bzw. der Computerplattform, auf der die Anwendung ausgeführt wird. Die Kontrollfunktion ist in einer solchen Variante also eine extern des Gerätes oder eines Computers mit der Anwendung angeordnete Einrichtung, insbesondere als Bestandteil einer Firewall oder eines Gateways oder eines Routers ausgebildet. Dies bietet den Vorteil, dass in die Anwendung und die Laufzeitumgebung bzw. in das Gerät nicht eingegriffen werden muss, was insbesondere bei 3rd-Party-Produkten oft nicht möglich ist. Zudem wird dadurch die Performance der Anwendung, der Laufzeitumgebung bzw. des Gerätes nicht beeinträchtigt. Das bedeutet, dass eine Kontrollfunktion zur Anwendung der Zugriffsrechte und eine Protokollierungseinrichtung zur Überwachung der Nutzung der einzelnen Zugriffsrechte keine Rechenzeit und andere Ressourcen der Laufzeitumgebung bzw. des Gerätes beanspruchen, sondern einzeln oder gemeinsam auf einer externen Plattform ablaufen.

Umgekehrt kann vorteilhaft eine externe Plattform eingespart werden, wenn die Kontrollfunktion und/oder die Protokollierungseinrichtung auf dem Gerät bzw. der Computer-Plattform mit der Anwendung ablaufen, was auch gilt, wenn diese Funktionalitäten in einem Hypervisor einer Virtualisierungslösung oder in einer Firmware realisiert sind.

Vorteilhaft ist die Protokollierungseinrichtung auch dazu eingerichtet, die protokollierten Zugriffsrechte mit dem ursprünglichen Satz Zugriffsrechte zu vergleichen und die nicht genutzten der Zugriffsrechte zu protokollieren, so dass einerseits nur die nicht genutzten der Zugriffsrechte und nicht alle genutzten Zugriffsrechte dauerhaft gespeichert werden müssen, und in einer besonders vorteilhaften Variante auch der Satz mit den neu gestalteten Zugriffsrechten lokal erzeugt und angewendet werden kann.

Üblicherweise ist ein Engineeringssystem zur Bereitstellung von Anwendungen und/oder zur Konfigurierung von Geräten vorgesehen, wobei vorteilhaft das Engineeringssystem weiter dazu eingerichtet ist, den neuen Satz Zugriffsrechte zu erstellen und bei einer Neuinstallation der Anwendung oder einer ähnlichen Anwendung oder im Zuge einer erneuten Inbetriebnahme des Gerätes oder der Inbetriebnahme eines ähnlichen Gerätes jeweils diesen zuzuordnen. Somit können etablierte Strukturen zur Verwaltung der Zugriffsrechte eingesetzt werden.

Ein Ausführungsbeispiel des erfindungsgemäßen Verfahrens wird nachfolgend anhand der Zeichnungen erläutert; es dient gleichzeitig der Erläuterung einer erfindungsgemäßen Anordnung.

Dabei zeigen:
- Figur 1: in einer schematischen Darstellung ein Gerät mit einer Anwendung, wobei die Kontrolle der Zugriffe gemäß den Zugriffsrechten lokal erfolgt, und
- Figur 2: in einer schematischen Darstellung ein Gerät mit einer Anwendung, wobei die Kontrolle der Zugriffe gemäß den Zugriffsrechten mittels einer extern angeordneten Kontrollfunktion erfolgt.

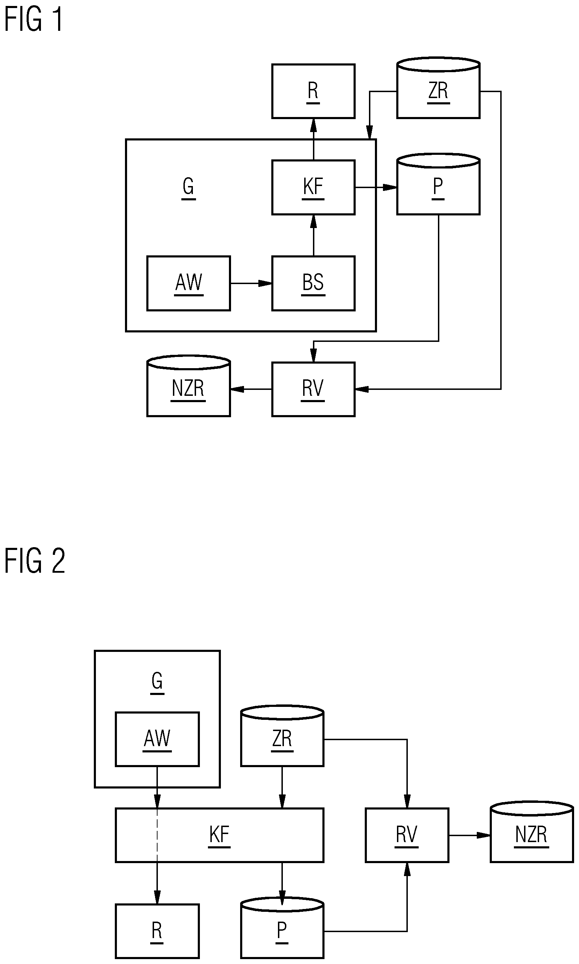

In der Figur 1 ist als Gerät G, hier ein industrielles Edge-Device mit einer Laufzeitumgebung zur Ausführung containerisierter Anwendungen AW, ein sog. Docker-Container mit der Anwendung AW installiert und ausgeführt. Die Container-Laufzeitumgebung umfasst dabei ein Betriebssystem BS, über das die Anwendung AW auf externe Ressourcen R zugreift.

Während der Ausführung werden alle möglichen Aktionen der Anwendung, insbesondere Zugriffe auf Ressourcen R, durch eine Kontrollfunktion KF registriert, analysiert und in einem sog. Logfile protokolliert; zu diesen zu protokollierenden Informationen bzw. Zugriffen auf Ressourcen R gehören auch Anmeldungen und Abmeldungen von Usern oder Administratoren, Fehlerereignisse und weitere sicherheitsrelevante Aktionen der Anwendung oder eines Nutzers.

Im vorliegenden Beispiel wird davon ausgegangen, dass alle relevanten Zugriffe der Anwendung AW über das Betriebssystem BS auf externe Ressourcen R erfolgen, so dass die Kontrollfunktion KF im Wesentlichen externe Zugriffe des Betriebssystems BS auf Ressourcen kontrolliert und protokolliert. Jedoch können durch die oder durch eine weitere Kontrollfunktion KF auch direkte Zugriffe der Anwendung auf Ressourcen R (z.B. Schnittstellen) behandelt werden.

Zudem können generell und ohne weitere Einschränkungen auch der Zugriff externer Ressourcen R, wozu auch externe Geräte, Anwendungen etc. gehören können, auf das Gerät G bzw. die Anwendung AW hinsichtlich ihrer Konformität zu den zugeordneten Zugriffsrechten ZR kontrolliert und Zugriffe dabei protokolliert werden - die Zugriffsrechte können grundsätzlich also sowohl aktive (Anwendung AW oder Gerät G greift auf Ressourcen R zu) als auch passive (Ressourcen R greifen auf Anwendung AW oder Gerät G zu) Berechtigungen umfassen.

Diese Logfiles werden regelmäßig an einen System-Logdienst mit einem Protokollierungsspeicher P außerhalb des Docker-Containers übermittelt und dort gespeichert. Beispielsweise können bei einer solchen Analyse unberechtigte Anmeldeversuche identifiziert und ausgegeben werden (z.B. mit dem Linuxbefehl "lastb") und andere Analysen gefahren werden, beispielsweise für ein Ressourcenmangement, für geöffnete Dateien (z.B. mit dem Linuxbefehl "Isof"), Zugriffe auf Netzwerk-Ressourcen, Zugriffe auf Aktoren von Automatisierungskomponenten etc.

Im Stand der Technik werden jedoch bei der Analyse solche Vorgänge meist nicht beachtet, die im Rahmen der erteilten Berechtigungen bzw. Zugriffsrechte erfolgen. Im Stand der Technik wird gewöhnlich also nicht analysiert, welcher berechtigte Nutzer sich niemals auf einer Maschine angemeldet hat. Es wird auch nicht analysiert, ob ein freigegebener Zugriff auf ein Dateisystem tatsächlich verwendet oder nicht verwendet wurde. So etwas stellt im Stand der Technik kein Ereignis dar, welches protokolliert wird.

Die Kontrollfunktion KF registriert in der vorliegenden Ausführungsform nicht nur die geschilderten Ereignisse, insbesondere solche, zu denen die der Anwendung bzw. dem Gerät zugeordneten Zugriffsrechte ZR in Anspruch genommen werden, sondern blockiert in den Fällen, in denen die zugeordneten Zugriffsrechte verletzt werden, die entsprechenden Zugriffe bzw. Zugriffsversuche. In einer Variante können die Analyse und die Zugriffskontrolle jedoch auch von getrennten oder externen Einheiten vorgenommen werden, beispielsweise durch eine Firewall.

Die in den Logfiles bzw. dem Protokollierungsspeicher P protokollierten Zugriffe, Ereignisse oder Ressourcen-Nutzungen werden durch eine Rechteverwaltung RV mit den freigegebenen Rechten (ursprünglich zugeordnete Zugriffsrechte ZR) abgeglichen, wobei solche Berechtigungen als Kandidaten für einen Entzug der Rechte herausgefiltert werden, die über eine gewisse Zeit oder nie verwendet wurden. Umgekehrt können auch bislang nur temporär zusätzlich zugeordnete Zugriffsrechte als Kandidaten für eine dauerhafte Zuordnung registriert werden, beispielsweise Berechtigungen für neue Nutzer, Nutzergruppen oder Nutzerrollen oder Zugriffsrechte auf neue / andere Ressourcen R. Die der Anwendung AW oder dem Gerät G zugeordneten Berechtigungen werden dann entsprechend eingeschränkt oder erweitert, sodass eine neue Berechtigungsklasse oder ein neues Setup gespeichert wird und ein Satz neuer Zugriffsrechte NZR erstellt wird. Bei der Installation einer nachfolgenden Version der Anwendung AW oder bei der Inbetriebnahme eines ähnlichen Gerätes G bzw. einer erneuten Inbetriebnahme oder bei der Installation eines Docker-Containers derselben Anwendungsklasse wird dann das entsprechend maßgeschneiderte Setup für Berechtigungen in Gestalt der neuen Zugriffsrechte NZR zugeordnet und verwendet.

Umgekehrt werden wie zuvor angedeutet auch in einem Fall, in dem einer Anwendung AW nachträglich erweiterte Rechte zugeordnet wurden, die über die ursprünglich erteilten Berechtigungen (ursprünglich zugeordnete Zugriffsrechte ZR) hinausgehen, beispielsweise die Freischaltung eines bestimmten Ports in einer Firewall, auch an eine Nachfolgeversion vererbt und somit in die neuen Zugriffsrechte NZR aufgenommen, auch wenn diese Berechtigungen bislang nicht dem Standard entsprochen haben, sofern diese zusätzlichen Berechtigungen auch tatsächlich genutzt wurden.

Die Figur 2 zeigt eine zur Figur 1 ähnliche Anordnung, wobei hier jedoch die Kontrollfunktion KF außerhalb des Gerätes G und damit auch außerhalb einer Ausführungsumgebung mit der Anwendung AW betrieben wird.

Im Unterschied zum Stand der Technik werden einmal eingerichtete Berechtigungen oder zugeordnete Zertifikate automatisch eingeschränkt, wenn sie bei einer bestimmten Anwendung oder Anwendungsklasse oder Gerät oder Geräteklasse nicht verwendet werden, sodass die verwendeten Geräte G oder Anwendungen AW, insbesondere auch nach Updates, Neuinstallationen oder erneuter Inbetriebnahme, weniger Angriffsfläche gegenüber unberechtigten Zugriffen, Viren, Malware und dergleichen aufweisen. Die Pflege von Zugriffsberechtigungen wird vereinfacht und weitgehend automatisiert.

## Patentansprüche

1. Verfahren zur Anpassung von Zugriffsrechten (ZR) einer industriellen Anwendung (AW) oder eines industriellen Gerätes (G) einer industriellen Automatisierungsanordnung, wobei der Anwendung (AW) oder dem Gerät (G) im Zuge der Installation oder Inbetriebnahme ein Satz Zugriffsrechte (ZR) zum Zugriff auf Ressourcen (R) der Automatisierungsanordnung, insbesondere auf Daten, Netzwerkverbindungen und Automatisierungskomponenten, zugeordnet wird,
wobei während eines Betriebs der Anwendung (AW) oder des Gerätes (G) Zugriffe und / oder Zugriffsversuche auf die Ressourcen (R) hinsichtlich ihrer Zulässigkeit in Bezug auf die Zugriffsrechte (ZR) geprüft und Zugriffe entsprechend erlaubt oder gesperrt werden, **dadurch gekennzeichnet,**
**dass** während des Betriebs der Anwendung (AW) oder des Gerätes (G) die tatsächlich für die Zugriffe genutzten der Zugriffsrechte (ZR) protokolliert werden,
**dass** die protokollierten Zugriffsrechte (ZR) mit dem ursprünglichen Satz Zugriffsrechte (ZR) verglichen werden, wobei unter Wegfall zumindest eines Teils der nicht genutzten Zugriffsrechte (ZR) aus dem ursprünglichen Satz Zugriffsrechte (ZR) ein neuer Satz Zugriffsrechte (NZR) erstellt wird, und
**dass** im Zuge einer Neuinstallation der Anwendung (AW) oder einer ähnlichen Anwendung (AW) oder im Zuge einer erneuten Inbetriebnahme des Gerätes (G) oder der Inbetriebnahme eines ähnlichen Gerätes (G) der neue Satz Zugriffsrechte (NZR) dieser Anwendung (AW) oder diesem Gerät (G) zugeordnet wird.

2. Verfahren nach Patentanspruch 1,
**dadurch gekennzeichnet,**
**dass** der Anwendung (AW) oder dem Gerät (G) im Zuge der Installation oder Inbetriebnahme der ursprüngliche Satz Zugriffsrechte (ZR) anhand einer Anwendungsklasse der Anwendung (AW) oder anhand einer Geräteklasse des Gerätes (G) aus einer Bibliothek ausgelesen und der Anwendung (AW) oder dem Gerät (G) zugeordnet wird.

3. Verfahren nach einem der vorhergehenden Patentansprüche,
**dadurch gekennzeichnet,**
**dass** der der Anwendung (AW) oder dem Gerät (G) im Zuge der Installation oder Inbetriebnahme zugeordnete ursprüngliche Satz Zugriffsrechte (ZR) auf einen Benutzer oder auf eine Rolle eines Benutzers oder einer Benutzergruppe bezogene Zugriffsrechte (ZR) oder Einschränkungen aufweist oder mit solchen während des Betriebs erweitert wird, wobei diese auf den Benutzer oder die Benutzergruppe bezogenen Zugriffsrechte (ZR) oder Einschränkungen in den neuen Satz Zugriffsrechte (NZR) übernommen werden.

4. Verfahren nach Patentanspruch 3,
**dadurch gekennzeichnet,**
**dass** die auf den Benutzer oder die Benutzergruppe bezogenen Zugriffsrechte (ZR) nur in dem Maße übernommen werden, in dem diese während des Betriebs der Anwendung (AW) oder des Gerätes (G) tatsächlich genutzt wurden.

5. Verfahren nach einem der vorhergehenden Patentansprüche,
**dadurch gekennzeichnet,**
**dass** die zugeordneten Zugriffsrechte (ZR) durch eine Laufzeitumgebung, in der die Anwendung (AW) abläuft oder die auf dem Gerät (G) installiert ist, insbesondere durch ein Betriebssystem (BS), durch eine Firmware oder durch einen Hypervisor, zur Bewertung und Kontrolle der Zugriffe der Anwendung (AW) oder des Gerätes (G) auf die Ressourcen (R) verwendet werden.

6. Verfahren nach einem der vorhergehenden Patentansprüche,
**dadurch gekennzeichnet,**
**dass** die Protokollierung durch eine Funktion oder eine Erweiterung der Laufzeitumgebung erfolgt.

7. Verfahren nach Patentanspruch 5 oder 6,
**dadurch gekennzeichnet,**
**dass** durch die Laufzeitumgebung eine externe Kontrollfunktion (KF), insbesondere eine Firewall, gemäß der Zugriffsrechte (ZR) konfiguriert wird.

8. Verfahren nach Patentanspruch 7,
**dadurch gekennzeichnet,**
**dass** die externe Kontrollfunktion die den einzelnen Zugriffsrechten (ZR) entsprechenden Zugriffe zumindest jeweils einmalig in einem Betrachtungszeitraum, insbesondere in dem Zeitraum seit einer letzten Konfiguration der Kontrollfunktion, protokolliert, wobei diese protokollierten Informationen bei der Erstellung des neuen Satzes Zugriffsrechte (NZR) verwendet werden.

9. Anordnung zur Anpassung von Zugriffsrechten (ZR) einer industriellen Anwendung (AW) oder eines industriellen Gerätes (G) einer industriellen Automatisierungsanordnung, wobei der Anwendung (AW) oder dem Gerät (G) ein Satz Zugriffsrechte (ZR) zum Zugriff auf Ressourcen (R) der Automatisierungsanordnung, insbesondere auf Daten, Netzwerkverbindungen und Automatisierungskomponenten, zugeordnet ist,
wobei eine Kontrollfunktion (KF) zur Prüfung von Zugriffen und / oder Zugriffsversuchen der Anwendung (AW) oder des Gerätes (G) auf die Ressourcen (R) hinsichtlich ihrer Zulässigkeit in Bezug auf die Zugriffsrechte (ZR) während eines Betriebs und zur entsprechenden Erlaubnis oder Sperre der Zugriffe vorgesehen ist,
**dadurch gekennzeichnet,**
**dass** eine Protokollierungseinrichtung (P) vorgesehen ist, die dazu eingerichtet ist, während des Betriebs der Anwendung (AW) oder des Gerätes (G) die tatsächlich für die Zugriffe genutzten der Zugriffsrechte (ZR) zu protokollieren,
**dass** weiter eine Rechteverwaltung (RV) dazu vorgesehen ist, die protokollierten Zugriffsrechte (ZR) mit dem ursprünglichen Satz Zugriffsrechte (ZR) zu vergleichen, wobei vorgesehen ist, unter Wegfall zumindest eines Teils der nicht genutzten Zugriffsrechte (ZR) aus dem ursprünglichen Satz Zugriffsrechte (ZR) einen neuen Satz Zugriffsrechte (NZR) zu erstellen, und
**dass** vorgesehen ist, im Zuge einer Neuinstallation der Anwendung (AW) oder einer ähnlichen Anwendung (AW) oder im Zuge einer erneuten Inbetriebnahme des Gerätes (G) oder der Inbetriebnahme eines ähnlichen Gerätes (G) der neue Satz Zugriffsrechte (NZR) dieser Anwendung (AW) oder diesem Gerät (G) zuzuordnen.

10. Anordnung nach Patentanspruch 9,
**dadurch gekennzeichnet,**
**dass** ein Engineeringssystem zur Bereitstellung von Anwendungen (AW) und/oder zur Konfigurierung von Geräten (G) vorgesehen ist, wobei das Engineeringssystem weiter dazu eingerichtet ist, den neuen Satz Zugriffsrechte (NZR) zu erstellen und bei einer Neuinstallation der Anwendung (AW) oder einer ähnlichen Anwendung (AW) oder im Zuge einer erneuten Inbetriebnahme des Gerätes (G) oder der Inbetriebnahme eines ähnlichen Gerätes (G) jeweils diesen zuzuordnen.

11. Anordnung nach einem der Patentansprüche 9 oder 10,
**dadurch gekennzeichnet,**
**dass** die Kontrollfunktion (KF) Bestandteil des Gerätes (G) oder eines Computers mit der Anwendung (AW) ist, insbesondere ein Teil eines Betriebssystems (BS), eines Hypervisors, oder einer Firmware des Gerätes (G) oder des Computers.

12. Anordnung nach einem der Patentansprüche 9 bis 11,
**dadurch gekennzeichnet,**
**dass** die Kontrollfunktion (KF) eine extern des Gerätes (G) oder eines Computers mit der Anwendung (AW) angeordnete Einrichtung ist, insbesondere als Bestandteil einer Firewall oder eines Gateways oder eines Routers.
